# FASCICULE DE BREVET EUROPEEN

(11) **EP 3 695 492 B1**
(45) Date de publication et mention de la délivrance du brevet: **05.01.2022**
(21) Numéro de dépôt: 18758944.5
(22) Date de dépôt: 01.08.2018
(51) Int. Cl.: H02K 5/20, H02K 9/19, H02K 5/10

(54) **MACHINE ÉLECTRIQUE ET PROCÉDÉ DE FABRICATION**
ELEKTRISCHE MASCHINE UND VERFAHREN ZUR HERSTELLUNG DAVON
ELECTRICAL MACHINE AND METHOD FOR MANUFACTURING SAME

(30) Priorité: 09.10.2017 FR 1701042
(43) Date de publication de la demande: 19.08.2020
(73) Titulaire: L'AIR LIQUIDE, Société Anonyme pour l'Etude et l'Exploitation des Procédés Georges Claude, 75007 Paris (FR)
(72) Inventeur: DURAND, Fabien, 38340 Voreppes (FR)
(74) Mandataire: Air Liquide
(86) Numéro de dépôt international: PCT/FR2018/051976
(87) Numéro de publication internationale: WO 2019/073130

(56) Documents cités:
- WO-A1-2016/018828
- WO-A1-2017/071970
- CN-B- 102 904 371
- CN-U- 207 234 587
- JP-A- H0 670 507
- JP-A- H07 111 759
- JP-A- H07 336 946
- JP-A- H08 103 053
- JP-A- H08 111 966
- JP-A- 2007 143 247
- JP-A- 2015 059 715

## Description

L'invention concerne une machine électrique et son procédé de fabrication.

L'invention concerne plus particulièrement une machine électrique, notamment moteur électrique, comprenant un stator et un rotor disposés dans un carter, le carter comprenant une première face munie de nervures et destinée à être en contact avec un fluide de refroidissement de la machine, la machine étant munie d'une structure de fermeture qui est fixée de façon étanche sur la première face du carter pour délimiter avec la première face du carter un espace formant un circuit pour le fluide de refroidissement du moteur, la structure de fermeture étant fixée par soudage et/ou brasage et/ou sertissage sur la première face du carter et comprenant au moins un couvercle.

Il est connu de prévoir un circuit de refroidissement des moteurs électriques (et en particulier du stator des moteurs), cf. par exemple EP2680408A1 ou CN 102 904 371 B.

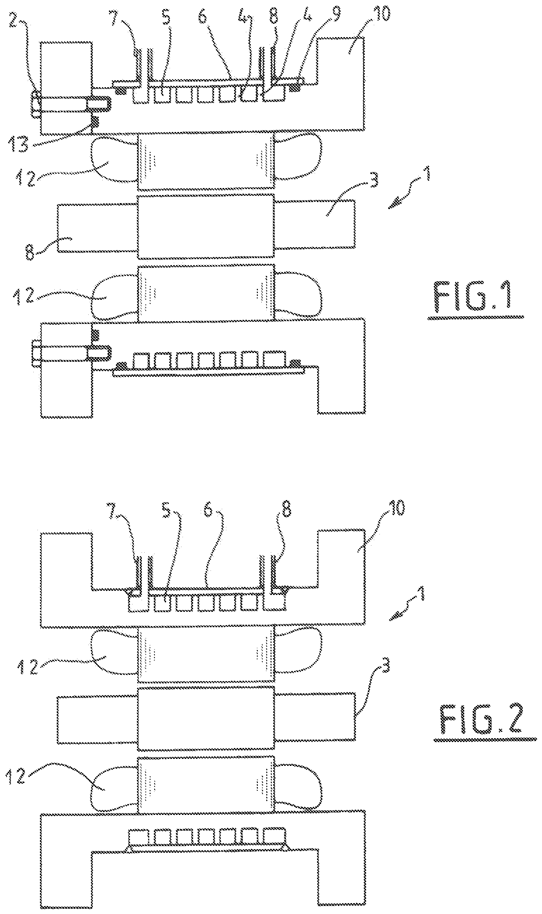

Des solutions connues prévoient (cf. figure 1) que le carter 10 entourant le rotor 3 et le stator 12 comporte des nervures 4 formant un ou des canaux hélicoïdaux. La face nervurée du carter 10 est refermée de façon étanche par une structure de fermeture (couvercle 6, tubes 7, 8) pour former un circuit 5 de refroidissement autour du moteur. Dans la configuration de la figure 1, le carter 10 est constitué de plusieurs parties assemblées entre elles par des liaisons vissées et rendues étanches par des joints 9, 13 toriques en élastomère. Cette solution présente de nombreux inconvénients parmi lesquels :
- une faible tenue mécanique de pièces vissées par rapport à un système monobloc,
- la nécessité d'une épaisseur relativement importante du carter 10 pour permettre d'y loger des vis 2 et le joint 13 tout en rendant le montage du couvercle tubulaire 6 possible,
- la nécessité d'utiliser un matériau à forte conductivité thermique pour le carter 10 afin de limiter la température du stator moteur. En effet la forte épaisseur du carter 10 doit être compensée par une plus grande conductivité thermique,

- le risque de corrosion du carter 10 par le fluide de refroidissement ou l'ambiance dans le volume entourant le carter. Ce risque est lié au choix du matériau à forte conductivité thermique (alliage d'aluminium par exemple),
- le risque de fuite entre la cavité moteur et le volume entourant le carter 10 au travers du joint 13,
- le risque de détérioration dans le temps des joints et par conséquent le risque d'avoir à démonter le système pour maintenance.

Dans la configuration de la figure 2 le carter 10 moteur est constitué de plusieurs parties assemblées entre elles par soudage ou brasage. Les inconvénients de cette solution sont:
- le besoin possible d'un traitement thermique après soudage en vue de stabiliser géométriquement le carter 10,
- la nécessité de réaliser un usinage de finition après soudage afin de garantir la bonne géométrie du carter 10 ainsi que le bon ajustement entre le stator 2 moteur et le carter 10.

En effet, la fabrication (soudage) de cette structure de moteur créé des déformations du carter 10 qui nuisent au dimensionnement relatif précis entre le stator 12 et le carter 10.

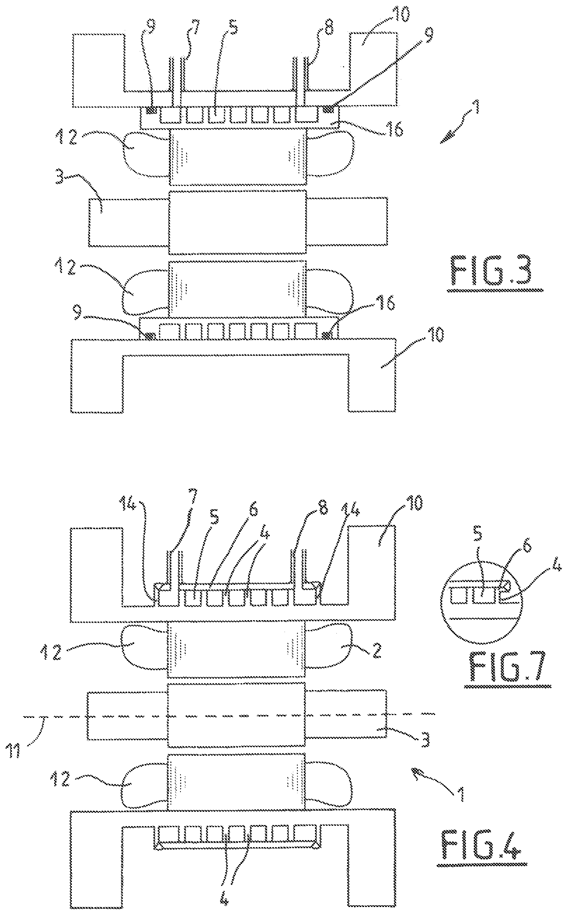

Dans la configuration de la figure 3 le carter 10 moteur est monobloc et la pièce 16 comprenant les canaux du circuit 5 de refroidissement est insérée dans ce dernier. Le fluide circulant entre le carter 10 et la pièce 16 est rendu étanche par rapport à la cavité moteur par des joints 9. Les inconvénients de cette solution sont:
- le risque de fuite entre la cavité moteur et le fluide de refroidissement,
- le risque de détérioration dans le temps des joints 9 et par conséquent le risque d'avoir à démonter le système pour maintenance.

Une autre solution (non représentée par une figure) consiste à consiste à remplacer dans la configuration de la figure 3 les joints toriques par des soudures ou brasures. Les inconvénients de cette solution sont:
- le risque de fuite entre la cavité moteur et le fluide de refroidissement au travers d'une soudure défectueuse lié à de la corrosion ou de la fatigue,
- la nécessité de réaliser un usinage de finition après soudage ou brasage afin de garantir la bonne géométrie du carter ainsi que le bon ajustement entre le stator 12 moteur et la pièce 6.

Un but de la présente invention est de pallier tout ou partie des inconvénients de l'art antérieur relevés ci-dessus.

A cette fin, une machine électrique selon la revendication 1 est proposée.

Ainsi, cette structure permet de localiser les déformations liées au soudage et/ou brasage dans des zones sans importance d'ajustement pour la géométrie du carter. L'invention peut utiliser un carter monobloc (d'une pièce) pouvant être fabriqué avec un matériau à faible conductivité thermique tel que l'acier inoxydable par exemple.

Cette structure permet d'augmenter la robustesse et la durée de vie du dispositif. De plus, cette solution permet de diminuer la complexité et donc le coût et le temps de fabrication de l'ensemble moteur et son carter.

Par ailleurs, des modes de réalisation de l'invention peuvent comporter l'une ou plusieurs des caractéristiques suivantes :
- la machine comporte une pluralité de nervures s'étendant selon une direction de la machine, la structure de fermeture est fixée par soudage et/ou brasage/et/ou sertissage sur les nervures d'extrémités c'est-à-dire sur les nervures situées aux deux extrémités de la pluralité de nervures selon la direction,
- les nervures comportent chacune une extrémité inférieure solidaire du carter et une extrémité supérieure terminale sur laquelle est soudée et/ou brasée et/ou sertie la structure de fermeture,
- les nervures ont une flexibilité c'est-à-dire une déformabilité (en mm) par unité d'effort de déformation (en Newton), qui est au moins deux fois et de préférence cinq supérieure à la flexibilité du reste du corps carter,
- les nervures ont une épaisseur ou largeur deux à quatre fois inférieure au reste du corps carter,
- les nervures ont une épaisseur comprise entre 0,5 et 5% de la dimension transversale ou du diamètre extérieur du stator,
- les nervures ont une hauteur comprise entre deux et vingt fois leur épaisseur,
- la structure de fermeture comprend au moins un tube soudé sur les nervures et/ou sur le couvercle et formant une entrée ou une sortie pour le fluide de refroidissement,
- la machine est dépourvue de système d'étanchéité à joint ou d'un système de vissage entre la structure de fermeture et le carter,
- le circuit de refroidissement contient un liquide caloporteur,
- les nervures forment une ou des gorges hélicoïdales ou une ou des gorges circulaires non hélicoïdales sur la première face du carter autour d'un axe longitudinal du carter,
- les nervures forment une ou des gorges hélicoïdales ou une ou des gorges circulaires non hélicoïdales sur la première face du carter autour d'un axe longitudinal du carter,

L'invention concerne également un procédé de fabrication d'une machine électrique suivant la revendication 12.

Selon d'autres particularités possibles :
- à l'issue de l'étape de soudage de la structure de fermeture sur la première face du carter, le procédé est dépourvu de l'un au moins parmi : un usinage de finition du carter pour corriger une déformation du carter un traitement thermique du carter destiné à stabiliser géométriquement le carter.

D'autres particularités et avantages apparaîtront à la lecture de la description ci-après, faite en référence aux figures dans lesquelles :
- les figures 1 à 3 représentent des vues en coupe, schématiques et partielles, illustrant trois exemples de géométries connues de machines électriques,
- la figure 4 représente une vue en coupe, schématique et partielle, illustrant un premier exemple de réalisation de l'invention,
- la figure 5 représente une vue en coupe, schématique et partielle, illustrant un deuxième exemple de réalisation de l'invention,
- la figure 6 représente une vue en perspective, partiellement éclatée d'un exemple de structure de moteur auquel l'invention peut s'appliquer,
- la figure 7 représente en coupe, schématique et partielle d'un détail de machine électrique illustrant une variante possible de géométrie (nervures, fixation).

La machine 1 électrique (notamment le moteur électrique) illustrée à la figure 4 comprend comprenant un stator 12 et un rotor 3 disposés dans un carter 10. Le stator 12 est disposé autour du rotor 3, autour d'un axe longitudinal 11.

Le carter 10 a une forme de préférence axisymétrique (symétrique autour de l'axe 11) et par exemple cylindrique tubulaire est disposé autour du stator 12 (autour de l'axe 11 longitudinal). Le carter 10 est de préférence une pièce métallique monobloc (c'est-à-dire pas en plusieurs parties assemblées).

Par exemple, le stator 12 peut être monté dans le carter 10 en utilisant un frettage ou un élément intermédiaire en vu de diminuer la résistance de contact (colle ou graisse thermique par exemple).

Le carter 10 a une face extérieure (tournée vers l'extérieur) du moteur et une face intérieure en contact avec le stator 12.

La face extérieure du carter 10 est destinée à être en contact avec un fluide de refroidissement de la machine 1.

La face extérieure est munie de nervures 4, 14 formant par exemple un ou plusieurs canaux pour le fluide de refroidissement. La machine 1 comprend par ailleurs une structure 6 de fermeture qui est fixée de façon étanche sur le carter 10 (sur la face extérieure au niveau des nervures 4). Cette structure 6 de fermeture délimite avec cette face du carter 10 un circuit 5 étanche pour le fluide de refroidissement du moteur 1. Cette structure de fermeture est fixée par soudage sur le carter 10 et comprend au moins un couvercle 6 (paroi tubulaire ou chemise entourant le carter 10).

Ce couvercle 6 (ou chemise) lié par soudure et/ou brasure au carter 10 peut être en une seule pièce ou en plusieurs coquilles en vue de faciliter son montage autour du carter 10.

Cette structure de fermeture comprend en outre un tube 7 d'entrée et un tube 8 de sortie pour le fluide de refroidissement entre les deux extrémités du circuit de canaux délimité par les nervures 4.

La structure 6 de fermeture peut être composée de plusieurs pièces assembles les unes aux autres par soudage, et/ou brasage et/ou sertissage.

Ces pièces 7, 8 utilisées pour acheminer et évacuer le fluide de refroidissement à l'entrée et à la sortie du circuit 5 peuvent alternativement être réalisées par des canaux intégrés dans le carter 10 et/ou le couvercle 6.

Selon une particularité de la solution, la structure 6 de fermeture est fixée par soudage et/ou brasage (et/ou sertissage) sur le carter 10 mais uniquement sur lesdites nervures 4, 14.

De préférence, la structure 6 de fermeture est fixée par soudage et/ou brasage sur le carter 10 uniquement sur les nervures 14 d'extrémité qui délimitent le circuit 5. C'est-à-dire que, lorsqu'il y a une pluralité de nervures 4, 14 comme illustré sur les figures, la fixation est faite au niveau des nervures 14 (et de préférence uniquement à cet endroit) qui sont situées aux deux extrémités de la succession de nervures et qui encadrent le reste des nervures 4. Dans le cas où il n'y a que quelques nervures 14 aux deux extrémités du circuit (pas de nervures 4 entre ces dernières), la structure 6 de fermeture est fixée (par soudage, brasage...) sur ces nervures 14 (et uniquement sur celles-ci-).

Par exemple, la structure 6 de fermeture est fixée sur la première nervure 14 et dernière nervure 14 selon la direction de l'axe 11 longitudinale.

Bien entendu, il peut également être prévu un soudage/brasage additionel sur les nervures 4 situées entre les nervures 14 d'extrémité.

Ainsi, la soudure ou brasure du couvercle 6 (et éventuellement des tubes 7, 8) sur le carter 10 est réalisée uniquement sur des nervures 14 ou les lèvres du carter 10.

Le procédé de soudage peut avantageusement être du type laser ou faisceau d'électron, mais tout autre procédé de soudage ou brasage peut être utilisé.

Le couvercle 6 peut avantageusement être lié aux lèvres 14 du carter 10 par un procédé de sertissage.

Ces nervures 14 sont le support du soudage ou du brasage et permettent ainsi de localiser les déformations liées au procédé de soudage dans celles-ci et dans la pièce 6 sans entrainer de déformation des autres parties du carter 10.

Les nervures 14 comportent chacune une extrémité inférieure solidaire du carter 10 et une extrémité supérieure terminale sur laquelle est soudée ou brasée la structure 6 de fermeture. Comme illustré à la figure 7, en coupe selon un plan longitudinal passant par l'axe 11 longitudinal, les nervures 4, 14 peuvent avoir toute autre forme que celle d'une dent parallélépipédique, par exemple une forme en L inversé, en équerre ou en T notamment.

Les soudures ou brasures sont ainsi réalisées uniquement sur des parties relativement plus souples ou plus flexibles du carter 10 qui permettent de localiser des déformations dues au processus de soudage ou brasage sans affecter le dimensionnement relatif du reste du carter 10.

Ces nervures 14 ont en effet de préférence une géométrie et notamment une épaisseur et une hauteur leur conférant une flexibilité supérieure à la flexibilité du reste du corps du carter 10 auquel elles sont solidaires.

Ainsi, toute autre géométrie de nervure 14 permettant d'empêcher le reste du carter 10 de se déformer après la phase de soudage ou brasage peut être envisagée. Il existe un risque de fuite entre le fluide de refroidissement et le volume autour du carter 10 au travers de la soudure ou brasure, ceci est non préjudiciable pour le moteur et facilement détectable et réparable.

Cette structure permet de s'affranchir de la présence de joint(s) d'étanchéité selon l'art antérieur.

Les nervures 14 ont par exemple une flexibilité c'est-à-dire une déformabilité en mm par unité d'effort de déformation en Newton, qui est au moins deux dois et de préférence cinq supérieure à la flexibilité du reste du corps carter 10.

Les nervures 14 ont par exemple une épaisseur ou largeur (selon une direction parallèle à l'axe 10 longitudinal) deux à quatre fois inférieure au reste du corps carter 10.

Ainsi, par exemple, la largeur (ou section) des nervures 14 sur lesquelles est soudée ou rasée la structure 6 de fermeture est au moins de fois inférieure (et de préférence trois à quatre fois inférieure) à la largeur ou section de la portion du corps de carter 10 à laquelle elle est attachée.

Les nervures 14 ont par exemple une épaisseur comprise entre 0,5 et 5% du diamètre extérieur du stator 12.

De même, les nervures 14 ont par exemple une hauteur (perpendiculairement à l'axe 11 longitudinal) comprise entre deux et vingt fois l'épaisseur de celles-ci.

Cette structure/configuration présente de nombreux avantages par rapport aux solutions connues et notamment tout ou partie des avantages suivants :
- le risque de fuite entre la cavité moteur et le fluide de refroidissement est presque nul car c'est une pièce monobloc (carter 10) qui réalise cette étanchéité,
- le risque de fuite entre la cavité moteur et le volume autour du carter 10 est presque nul car c'est une pièce monobloc qui réalise cette étanchéité,
- la solution permet de ne pas utiliser d'assemblage vissé, ni de joints,
- l'absence de joint d'étanchéité est possible et entraîne l'absence de maintenance,
- la durée de vie de la structure est augmentée (typiquement de plusieurs dizaines d'années),
- compte tenu de la simplicité de la structure, l'invention a une grande fiabilité,
- la solution permet de s'affranchir de traitement thermique après soudage ou brasage en vue de stabiliser géométriquement le carter,
- la solution permet de s'affranchir d'un usinage de finition après soudage pour garantir une bonne géométrie du carter,
- la solution permet l'utilisation de matière peu oxydable du type acier inoxydable pour le carter et les autres pièces,
- l'utilisation de matière peu oxydable permet à la solution d'accepter une multitude de fluides de refroidissement,
- la solution permet de limiter la température du stator en limitant l'épaisseur de matière entre le stator et le fluide de refroidissement,
- la conception monobloc du carter 10 permet à la machine une grande tenue à la pression,
- la simplicité de conception et de fabrication permet de limiter le temps de fabrication ainsi que le coût de fabrication.

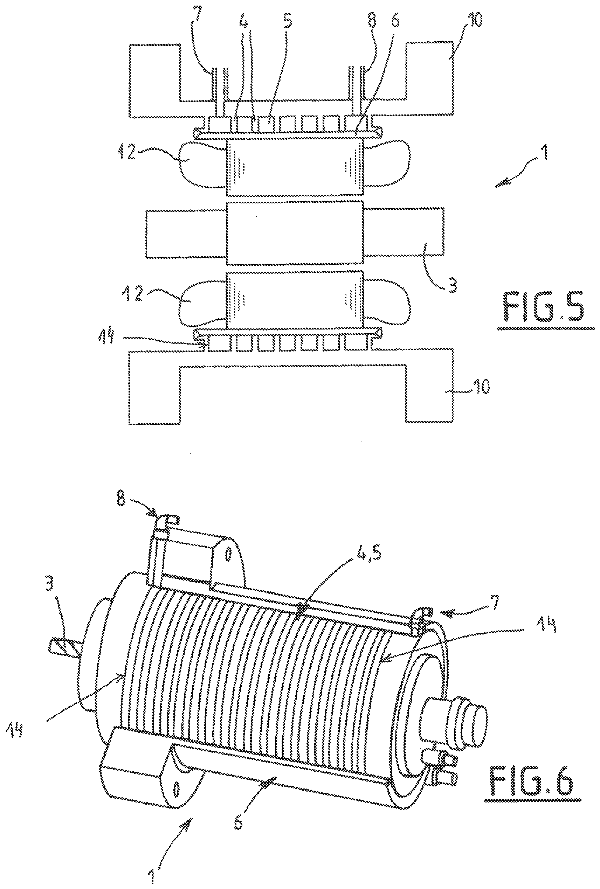

Dans la variante de réalisation de la figure 5 les nervures 4, 14 délimitant les canaux du circuit 5 de refroidissement sont situées sur la face du carter 10 tournée vers l'intérieur du moteur 1. Le couvercle 6 de fermeture est interposé entre le carter 10 et le stator 2. Les entrée 7 et sorties 8 du circuit 5 peuvent être situées sur la face extérieure du carter 10.

Cette variante prévoit également le soudage et/ou le brasage uniquement sur les nervures/lèvres 14 pour les mêmes avantages. Le seul inconvénient éventuel de cette solution est un potentiel risque de fuite entre la cavité moteur et le fluide de refroidissement au travers des soudures. Cette fuite potentielle est préjudiciable pour le moteur 1 est plus difficilement détectable et réparable que dans la variante de la figure 4.

L'invention, tout en étant de structure simple et peu coûteuse, permet de refroidir efficacement un stator 2 de moteur électrique tout en isolant les uns des autres les volumes suivants : cavité du moteur, fluide de refroidissement, volume autour du carter 10.

Le circuit 5 de refroidissement peut contenir par exemple de l'eau. L'eau entre par un tube 7 d'entrée et circule par exemple en hélice autour de l'axe 11 longitudinal entre le stator 10 et la structure de fermeture 6.

Cette circulation en hélice peut être rendue possible par un usinage en hélice de la face correspondante du carter 10. Lors du passage de l'eau entre le stator 10 et la structure 6 de fermeture, l'eau extrait de la chaleur au carter 10 par convection et au stator 2 moteur par conduction au travers du carter 10. L'eau sort finalement par le tube 8 de sortie.

Bien entendu, le fluide de refroidissement peut être de l'eau ou tout autre liquide ou gaz ou mélange diphasique capable de transporter de la chaleur.

L'échange de chaleur entre le fluide et le carter 10 peut être de l'ébullition.

La géométrie de la lèvre/nervure 4, 14 n'est pas limitée aux exemples décrits pour autant quelle remplit la fonction de ne pas déformer le carter 10 pendant la phase de soudage.

L'hélice usinée utilisée pour la circulation du fluide formant les nervures 4, 14 peut être réalisée par une forme entourée en hélice autour du carter 10 (tube, profilé plat par exemple). De plus, cette hélice peut aussi ne pas être présente (un simple canal ou des canaux multiples sans hélice par exemple).

## Revendications

1. Machine électrique, notamrnent moteur électrique, comprenant un stator (2) et un rotor (3) disposés dans un carter (10), le carter (10) comprenant une première face munie de nervures (4, 14) et destinée à être en contact avec un fluide de refroidissement de la machine (1), la machine (1) étant munie d'une structure (6) de fermeture qui est fixée de façon étanche sur la première face du carter (10) pour délimiter avec la première face du carter (10) un espace formant un circuit (5) pour le fluide de refroidissement du moteur (1), la structure de fermeture étant fixée par soudage et/ou brasage et/ou sertissage sur la première face du carter (10) et comprenant au moins un couvercle (6), la structure (6) de fermeture étant fixée par soudage et/ou brasage et/ou sertissage sur le carter (10) uniquement sur lesdites nervures, **caractérisée en ce que** les nervures (4, 14) ont une géométrie et notamment une épaisseur et une hauteur leur conférant une flexibilité supérieure à la flexibilité du reste du corps du carter (10) duquel elles sont solidaires, de sorte d'empêcher le reste du carter (10) de se déformer après la phase de soudage, brasage ou sertissage.

2. Machine selon la revendication 1, **caractérisée en ce que** qu'il comporte une pluralité de nervures s'étendant selon une direction (11) de la machine et **en ce que** la structure (6) de fermeture est fixée par soudage et/ou brasage/et/ou sertissage sur les nervures (14) d'extrémités c'est-à-dire sur les nervures (14) situées aux deux extrémités de la pluralité de nervures selon la direction (11).

3. Machine selon la revendication 1 ou 2, **caractérisée en ce que** les nervures (4, 14) comportent chacune une extrémité inférieure solidaire du carter (10) el une extrémité supérieure terminale sur laquelle est soudée et/ou brasée et/ou sertie la structure (6) de fermeture.

4. Machine selon l'une quelconque des revendications 1 à 3. **caractérisée en ce que** les nervures (4, 14) ont une flexibilité c'est à-dire une déformabilité (en mm) par unité d'effort de déformation (en Newton), qui est au moins deux fois et de préférence cinq supérieure à la flexibilité du reste du corps carter (10).

5. Machine selon l'une quelconque des revendications 1 à 4, **caractérisée en ce que** les nervures (14) ont une épaisseur ou largeur deux à quatre fois inférieure au reste du corps carter (10),

6. Machine selon l'une quelconque des revendications 1 à 5, **caractérisée en ce que** les nervures (4, 14) ont une épaisseur comprise entre 0,5 et 5% de la dimension transversale ou du diamètre extérieur du stator 12.

7. Machine selon l'une quelconque des revendications 1 à 6, **caractérisée en ce que** les nervures (4) ont une hauteur comprise entre deux et vingt fois leur épaisseur.

8. Machine selon l'une quelconque des revendications 1 à 7, **caractérisée en ce que** la structure de fermeture comprend au moins un tube (7, 8) soudé sur les nervures (4) et/ou sur le couvercle (6) et formant une entrée ou une sortie pour le fluide de refroidissement.

9. Machine selon l'une quelconque des revendications 1 à 8, **caractérisée en ce qu'**elle est dépourvue de système d'étanchéité à joint ou d'un système de vissage entre la structure (6) de fermeture et le carter (10),

10. Machine selon l'une quelconque des revendications 1 à 9, **caractérisée en ce que** le circuit (5) de refroidissement contient un liquide caloporteur.

11. Machine selon l'une quelconque des revendications 1 à 10, **caractérisée en ce que** les nervures (4, 14) forment une ou des gorges hélicoïdales ou une ou des gorges circulaires non hélicoïdales sur la première face du carter (10) autour d'un axe (11) longitudinal du carter (10).

12. Procédé de fabrication d'une machine électrique, notamment moteur, conforme à l'une quelconque des revendications 1 à 11, la machine comprenant un stator (12) et un rotor (3) disposés dans un carter (10), le carter (10) comprenant une première face munie de nervures (4) et destinée à être en contact avec un fluide de refroidissement de la machine (1), le procédé comprenant une étape de fixation d'une structure (6) de fermeture étanche sur la première face du carter (10) pour délimiter avec la première face du carter (10) un circuit (5) pour le fluide de refroidissement du moteur (1), dans lequel la structure de fermeture comprend au moins un couvercle (6), et en ce que la structure de fermeture est fixée par soudage sur la première face du carter (10) et uniquement sur lesdites nervures (4,14) et notamment sur les nervures (14) d'extrémités c'est-à-dire les nervures situées aux deux extrémités de la pluralité de nervures.

13. Procédé selon la revendication 12, **caractérisé en ce que**, à l'issue de l'étape de soudage de la structure de fermeture sur la première face du carter (10), le procédé est dépourvu de l'un au moins parmi : un usinage de finition du carter (10) pour corriger une déformation du carter (10) un traitement thermique du carter (10) destiné à stabiliser géométriquement le carter (10).

## Patentansprüche

1. Elektrische Maschine, insbesondere Elektromotor, umfassend einen Stator (2) und einen Rotor (3), die in einem Gehäuse (10) angeordnet sind, wobei das Gehäuse (10) eine erste Seite umfasst, die mit Rippen (4, 14) versehen ist und dazu bestimmt ist, mit einem Kühlfluid der Maschine (1) in Kontakt zu stehen, wobei die Maschine (1) mit einer Schließstruktur (6) versehen ist, die auf der ersten Seite des Gehäuses (10) dicht befestigt ist, um mit der ersten Seite des Gehäuses (10) einen Raum zu begrenzen, der einen Kreislauf (5) für das Kühlfluid des Motors (1) bildet, wobei die Schließstruktur durch Schweißen und/oder Löten und/oder Crimpen auf der ersten Seite des Gehäuses (10) befestigt ist und mindestens eine Abdeckung (6) umfasst, wobei die Schließstruktur (6) nur auf den Rippen durch Schweißen und/oder Löten und/oder Crimpen auf dem Gehäuse (10) befestigt ist, **dadurch gekennzeichnet, dass** die Rippen (4, 14) eine Geometrie und insbesondere eine Dicke und eine Höhe aufweisen, die ihnen eine größere Flexibilität als die Flexibilität des Rests des Körpers des Gehäuses (10) verleiht, mit dem sie fest verbunden sind, um zu verhindern, dass sich der Rest des Gehäuses (10) nach der Schweiß-, Löt- oder Crimpphase verformt.

2. Maschine nach Anspruch 1, **dadurch gekennzeichnet, dass** sie eine Mehrzahl von Rippen aufweist, die sich in einer Richtung (11) der Maschine erstrecken, und dadurch, dass die Schließstruktur (6) durch Schweißen und/oder Löten und/oder Crimpen auf den Endrippen (14) befestigt ist, das heißt auf den Rippen (14), die sich an beiden Enden der Mehrzahl von Rippen in der Richtung (11) befinden.

3. Maschine nach Anspruch 1 oder 2, **dadurch gekennzeichnet, dass** die Rippen (4, 14) jeweils ein unteres Ende, das mit dem Gehäuse (10) fest verbunden ist, und ein oberes Abschlussende, auf das die Schließstruktur (6) geschweißt und/oder gelötet und/oder gecrimpt ist, aufweisen.

4. Maschine nach einem der Ansprüche 1 bis 3, **dadurch gekennzeichnet, dass** die Rippen (4, 14) eine Flexibilität, das heißt eine Verformbarkeit (in mm) pro Verformungskrafteinheit (in Newton) aufweisen, die mindestens zweimal und vorzugsweise fünfmal höher als die Flexibilität des Rests des Gehäusekörpers (10) ist.

5. Maschine nach einem der Ansprüche 1 bis 4, **dadurch gekennzeichnet, dass** die Rippen (14) eine Dicke oder Breite aufweisen, die zwei bis viermal kleiner als der Rest des Gehäusekörpers (10) ist.

6. Maschine nach einem der Ansprüche 1 bis 5, **dadurch gekennzeichnet, dass** die Rippen (4, 14) eine Dicke zwischen 0,5 und 5 % der Querabmessung oder des Außendurchmessers des Stators 12 aufweisen.

7. Maschine nach einem der Ansprüche 1 bis 6, **dadurch gekennzeichnet, dass** die Rippen (4) eine Höhe zwischen dem Zwei- und Fünffachen ihrer Breite aufweisen.

8. Maschine nach einem der Ansprüche 1 bis 7, **dadurch gekennzeichnet, dass** die Schließstruktur mindestens ein Rohr (7, 8) umfasst, das auf die Rippen (4) und/oder die Abdeckung (6) geschweißt ist und einen Ein- oder Auslass für das Kühlfluid bildet.

9. Maschine nach einem der Ansprüche 1 bis 8, **dadurch gekennzeichnet, dass** sie kein Abdichtungssystem mit Dichtung oder Verschraubungssystem zwischen der Schließstruktur (6) und dem Gehäuse (10) aufweist.

10. Maschine nach einem der Ansprüche 1 bis 9, **dadurch gekennzeichnet, dass** der Kühlkreislauf (5) eine Wärmeübertragungsflüssigkeit enthält.

11. Maschine nach einem der Ansprüche 1 bis 10, **dadurch gekennzeichnet, dass** die Rippen (4, 14) eine oder mehrere spiralförmige Nuten oder eine oder mehrere kreisförmige, nicht spiralförmige Nuten auf der ersten Seite des Gehäuses (10) um eine Längsachse (11) des Gehäuses (10) bilden.

12. Verfahren zur Herstellung einer elektrischen Maschine, insbesondere eines Motors, nach einem der Ansprüche 1 bis 11, wobei die Maschine einen Stator (12) und einen Rotor (3) umfasst, die in einem Gehäuse (10) angeordnet sind, wobei das Gehäuse (10) eine erste Seite umfasst, die mit Rippen (4) versehen ist und dazu bestimmt ist, mit einem Kühlfluid der Maschine (1) in Kontakt zu stehen, wobei das Verfahren einen Schritt des Befestigens einer dichten Schließstruktur (6) auf der ersten Seite des Gehäuses (10) umfasst, um mit der ersten Seite des Gehäuses (10) einen Kreislauf (5) für das Kühlfluid des Motors (1) zu begrenzen, wobei die Schließstruktur mindestens eine Abdeckung (6) umfasst, und dadurch, dass die Schließstruktur durch Schweißen auf der ersten Seite des Gehäuses (10) und nur auf den Rippen (4, 14) und insbesondere auf den Endrippen (14), das heißt, den Rippen, die sich an beiden Enden der Mehrzahl von Rippen befinden, befestigt ist.

13. Verfahren nach Anspruch 12, **dadurch gekennzeichnet, dass** am Ende des Schritts des Schweißens der Schließstruktur auf die erste Seite des Gehäuses (10) das Verfahren mindestens eins von Folgendem nicht aufweist: ein Endbearbeiten des Gehäuses (10) zur Korrektur einer Verformung des Gehäuses (10), eine Wärmebehandlung des Gehäuses (10) zur geometrischen Stabilisierung des Gehäuses (10).

## Claims

1. Electric machine, in particular an electric motor, comprising a stator (2) and a rotor (3) that are disposed in a casing (10), the casing (10) comprising a first face that is provided with ribs (4, 14) and is intended to be in contact with a fluid for cooling the machine (1), the machine (1) being provided with a closing structure (6) that is fastened in a sealed manner to the first face of the casing (10) so as to delimit, with the first face of the casing (10), a space that forms a circuit (5) for the fluid for cooling the motor (1), the closing structure being fastened to the first face of the casing (10) by welding and/or brazing and/or crimping and comprising at least one cover (6), the closing structure (6) being fastened to the casing (10) by welding and/or brazing and/or crimping only at said ribs, **characterized in that** the ribs (4, 14) have a geometry, and in particular a thickness and a height, that gives them a flexibility greater than the flexibility of the rest of the body of the casing (10) to which they are secured, so as to prevent the rest of the casing (10) from deforming after the welding, brazing or crimping phase.

2. Machine according to Claim 1, **characterized in that** it has a plurality of ribs extending in a direction (11) of the machine, and **in that** the closing structure (6) is fastened to the end ribs (14), that is to say to the ribs (14) situated at the two ends of the plurality of ribs in the direction (11), by welding and/or brazing and/or crimping.

3. Machine according to Claim 1 or 2, **characterized in that** the ribs (4, 14) each have a lower end that is secured to the casing (10) and a terminal upper end to which the closing structure (6) is welded and/or brazed and/or crimped.

4. Machine according to any one of Claims 1 to 3, **characterized in that** the ribs (4, 14) have a flexibility, that is to say a deformability (in mm) per unit of deformation force (in newtons), which is at least two times and preferably five times greater than the flexibility of the rest of the casing (10) body.

5. Machine according to any one of Claims 1 to 4, **characterized in that** the ribs (14) have a thickness or width that is two to four times less than that of the rest of the casing (10) body.

6. Machine according to any one of Claims 1 to 5, **characterized in that** the ribs (4, 14) have a thickness of between 0.5 and 5% of the transverse dimension or of the outside diameter of the stator (12).

7. Machine according to any one of Claims 1 to 6, **characterized in that** the ribs (4) have a height of between two and twenty times their thickness.

8. Machine according to any one of Claims 1 to 7, **characterized in that** the closing structure comprises at least one tube (7, 8) that is welded to the ribs (4) and/or to the cover (6) and forms an inlet or an outlet for the cooling fluid.

9. Machine according to any one of Claims 1 to 8, **characterized in that** it has no mechanical sealing system or screw-fastening system between the closing structure (6) and the casing (10).

10. Machine according to any one of Claims 1 to 9, **characterized in that** the cooling circuit (5) contains a heat transfer liquid.

11. Machine according to any one of Claims 1 to 10, **characterized in that** the ribs (4, 14) form one or more helical grooves or one or more non-helical circular grooves in the first face of the casing (10) about a longitudinal axis (11) of the casing (10).

12. Method for manufacturing an electric machine, in particular a motor, in accordance with any one of Claims 1 to 11, the machine comprising a stator (12) and a rotor (3) that are disposed in a casing (10), the casing (10) comprising a first face that is provided with ribs (4) and is intended to be in contact with a fluid for cooling the machine (1), the method comprising a step of fastening a sealed closing structure (6) to the first face of the casing (10) so as to delimit, with the first face of the casing (10), a circuit (5) for the fluid for cooling the motor (1), wherein the closing structure comprises at least one cover (6), and in that the closing structure is fastened to the first face of the casing (10) and only to said ribs (4, 14), and in particular to the end ribs (14), that is to say the ribs situated at the two ends of the plurality of ribs, by welding.

13. Method according to Claim 12, **characterized in that**, at the end of the step of welding the closing structure to the first face of the casing (10), the method does not have at least one of: a finishing machining operation for the casing (10) so as to correct a deformation of the casing (10), and a heat treatment of the casing (10) that is intended to geometrically stabilize the casing (10).
